# EUROPEAN PATENT SPECIFICATION

(11) **EP 2 709 003 B1**
(45) Date of publication and mention of the grant of the patent: **01.08.2018**
(21) Application number: 11865214.8
(22) Date of filing: 15.09.2011
(51) Int. Cl.: G06F 9/30, G06F 9/38

(54) **LOOPBACK STRUCTURE AND DATA LOOPBACK PROCESSING METHOD FOR PROCESSOR**
LOOPBACK-STRUKTUR UND DATENLOOPBACKVERARBEITUNGSVERFAHREN FÜR EINEN PROZESSOR
STRUCTURE DE BOUCLAGE ET PROCÉDÉ DE TRAITEMENT DE BOUCLAGE DE DONNÉES POUR PROCESSEUR

(30) Priority: 12.05.2011 CN 201110122402
(43) Date of publication of application: 19.03.2014
(73) Proprietor: ZTE Corporation, Shenzhen, Guangdong 518057 (CN)
(72) Inventor: LI, Lihuang, Shenzhen Guangdong 518057 (CN); LI, Wei, Shenzhen Guangdong 518057 (CN)
(74) Representative: Lavoix
(86) International application number: PCT/CN2011/079663
(87) International publication number: WO 2012/151822

(56) References cited:
- WO-A1-2006/018822
- CN-A- 1 584 824
- CN-A- 85 101 348
- US-A- 5 293 499
- US-A- 5 781 790
- US-A1- 2011 035 570

## Description

### TECHNICAL FIELD

The disclosure relates to the field of processor-architecture design, and in particular to a loopback structure and data loopback processing method of a processor.

### BACKGROUND

A processor is a core component in a chip, and efficiency and power consumption of the processor affect largely that of the whole chip. Therefore, what needs to be considered in processor-architecture design is how to increase the efficiency of the processor and decrease the power consumption of the processor.

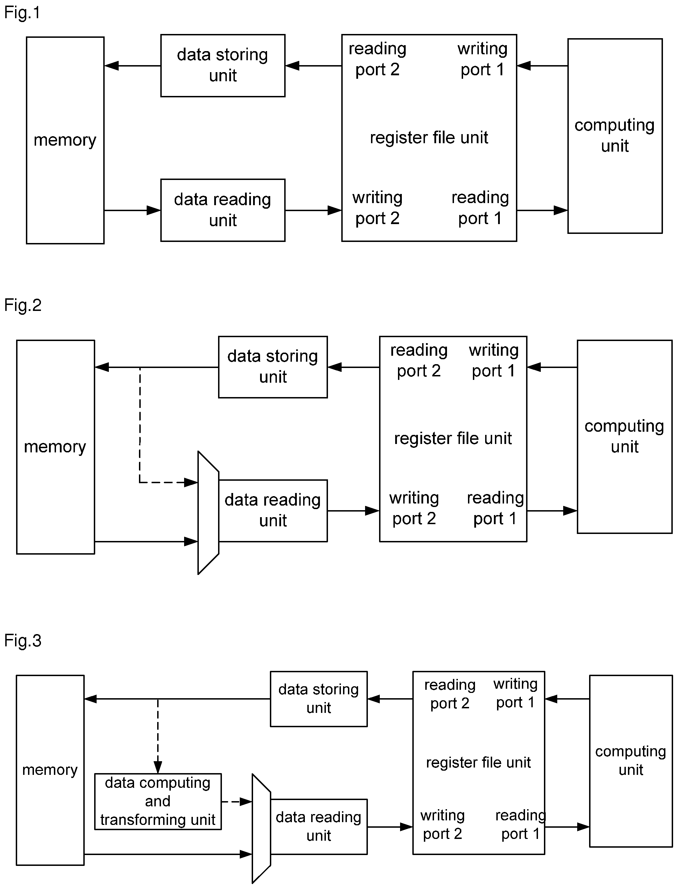

As shown in Fig.1, three data channels are provided in conventional processor-architecture, namely:
a 1st channel through " memory → data reading unit → register file unit";
a 2nd channel through "register file unit → computing unit → register file unit", which is also called a front channel; and
a 3rd channel through "register file unit → data storing unit → memory ".

In the conventional processor-architecture, before starting a computation, the data reading unit first reads an operand in the memory and sends the operand to the register file unit; then the computing unit reads the operand from the register file unit to start the computation, and writes a result of the computation back into the register file unit; finally, the data storing unit reads the result of the computation from the register file unit, and stores the result of the computation in the memory.

In the conventional processor-architecture, although data computation may be performed in cycles within the front channel consisting of "register file unit → computing unit → register file unit", the computing unit however can perform only an arithmetic logic computation, but not a special data transformation provided by the data reading unit and the data storing unit (such as data rotation-displacement). Therefore, if a special data transformation provided by the data reading unit and the data storing unit is to be performed, the processor has to write data back into the memory, and then read the data from the memory once again. An operation directed to the memory will cost the power consumption and time of the processor, in which case frequent reading-writing of the memory by the processor will have a major impact on the efficiency and power consumption of the whole processor.

### SUMMARY

In view of this, a main purpose of the disclosure is to provide a loopback structure and data loopback processing method of a processor, so as to increase efficiency of the processor and decrease power consumption of the processor.

To achieve this purpose, a technical solution of the disclosure is implemented as follows.

The disclosure provides a loopback structure of a processor, which includes a register file unit, a data storing unit, and a data reading unit: wherein:
the register file unit is configured to provide a data reading-writing service for the data storing unit and the data reading unit;
the data storing unit is connected to the register file unit, and is configured to read data via a reading port of the register file unit, to perform a data transformation on the read data, and to feed the transformed data back to the data reading unit; and
the data reading unit is connected to the register file unit and the data storing unit, and is configured to transform the data fed back by the data storing unit, and to write the transformed data in the register file unit via a writing port of the register file unit.

A data computing and transforming unit may be connected between the data storing unit and the data reading unit, and
the data computing and transforming unit may be configured to perform computation and transformation processing on the data fed back by the data storing unit, and provide the processed data to the data reading unit.

The data storing unit may be configured to mask an operation directed to a memory of the processor by the data storing unit itself when the data storing unit processes the data read via the reading port.

The loopback structure may further include a computing unit connected to the register file unit and configured to read a source operand from the register file unit, to perform a data computation based on the source operand, and to write a result of the computation in the register file unit.

The data storing unit may be configured to read the result of the computation based on the source operand via the reading port of the register file unit, to perform the data transformation on the read result of the computation, and to feed the transformed result of the computation back to the data reading unit; and
accordingly, the data reading unit may be configured to transform the result of the computation fed back by the data storing unit, and to write the transformed result of the computation in the register file unit via the writing port of the register file unit.

The data transformation may be a data rotation-displacement operation.

The disclosure further provides a data loopback processing method of a processor, including:
reading, by a data storing unit, data via a reading port of a register file unit, performing a data transformation on the read data, and feeding the transformed data back to a data reading unit; and
transforming, by the data reading unit, the data fed back by the data storing unit, and writing the transformed data in the register file unit via a writing port of the register file unit.

The method may further include:
performing, by a data computing and transforming unit connected between the data storing unit and the data reading unit, performing computation and transformation processing on the data fed back by the data storing unit, and providing the processed data to the data reading unit.

The method may further include:
masking, by the data storing unit, an operation directed to a memory of the processor by the data storing unit itself when the data storing unit processes the data read via the reading port.

The method may further include:
reading, by a computing unit connected to the register file unit, a source operand from the register file unit, performing a data computation based on the source operand, and writing a result of the computation in the register file unit.

The method may further include:
reading, by the data storing unit, the result of the computation based on the source operand via the reading port of the register file unit, performing the data transformation on the read result of the computation, and feeding the transformed result of the computation back to the data reading unit; and
transforming, by the data reading unit, the result of the computation fed back by the data storing unit, and writing the transformed result of the computation in the register file unit via the writing port of the register file unit.

The data transformation may be a data rotation-displacement operation.

The loopback structure and data loopback processing method of a processor provided by the disclosure provides an instruction and a channel directly from the data storing unit to the data reading unit; by providing the instruction and channel, after the computation by the computing unit and the data transformation by the data storing unit, data are not written into the memory directly, but are looped and fed back to the data reading unit. The channel reuses a special data transformation function of the data storing unit and the data reading unit (including data rotation-displacement and the like) as well as their reading and writing ports of the register file unit, and another data computing and transforming unit may be added between the data storing unit and the data reading unit as needed; this channel and the channel of "register file unit → computing unit → register file unit " are independent of each other, and may operate in parallel, that is, they may work independently without affecting each other.

With the disclosure, reading and writing operations to the memory by the processor, or any reading and writing conflicts due to such operations, is exempted, thereby increasing work efficiency of the processor and decreasing power consumption of the processor effectively.

### BRIEF DESCRIPTION OF THE DRAWINGS

Fig.1 is a schematic diagram of processor-architecture in the related art;
Fig.2 is a 1st schematic diagram of a loopback structure of a processor in an embodiment of the disclosure;
Fig.3 is a 2nd schematic diagram of a loopback structure of a processor in an embodiment of the disclosure;
Fig.4 is a sequence diagram of data loopback processing by a processor in an embodiment of the disclosure;
Fig.5 is a schematic diagram of independent front and the back channels in a loopback structure of a processor according to an embodiment of the disclosure; and
Fig.6 is a schematic diagram of a closed loop formed by a front channel and a back channel in a loopback structure of a processor according to an embodiment of the disclosure.

### DETAILED DESCRIPTION

A technical solution of the disclosure is further elaborated below with reference to the drawings and specific embodiments.

A loopback structure of a processor provided by the disclosure mainly includes a register file unit, a data storing unit, and a data reading unit: wherein the register file unit is configured to provide a data reading-writing service for the data storing unit and the data reading unit; the data storing unit, which is connected to the register file unit, is configured to read data via a reading port of the register file unit, to perform a data transformation on the read data, and to feed the transformed data back to the data reading unit; and the data reading unit, which is connected to the register file unit and the data storing unit, is configured to transform the data fed back by the data storing unit, and to write the transformed data in the register file unit via a writing port of the register file unit.

Preferably, a data computing and transforming unit may also be connected between the data storing unit and the data reading unit, and the data computing and transforming unit is configured to further perform computation and transformation processing on the data fed back by the data storing unit, and to provide the processed data for the data reading unit.

In addition, when processing the data read via the reading port, the data storing unit needs to mask an operation directed to a memory of the processor by the data storing unit itself.

Furthermore, the loopback structure may further include a computing unit, which is connected to the register file unit and is configured to read a source operand from the register file unit, to perform a data computation based on the source operand, and to write a result of the computation in the register file unit.

Then, the data storing unit may be further configured to read the result of the computation based on the source operand via the reading port of the register file unit, to perform the data transformation on the read result of the computation, and to feed the transformed result of the computation back to the data reading unit; and
accordingly, the data reading unit is configured to transform the result of the computation fed back by the data storing unit, and to write the transformed result of the computation in the register file unit via the writing port of the register file unit.

A data loopback processing method of a processor provided by the disclosure mainly includes:
reading, by a data storing unit, data via a reading port of a register file unit, performing, a data transformation on the read data, and feeding the transformed data back to a data reading unit; and
transforming, by the data reading unit, the data fed back by the data storing unit, and writing the transformed data in the register file unit via a writing port of the register file unit.

Preferably, the method further includes: reading, by a computing unit connected to the register file unit, a source operand from the register file unit, performing a data computation based on the source operand, and writing a result of the computation in the register file unit.

Then accordingly, the data storing unit may read the result of the computation based on the source operand via the reading port of the register file unit, perform the data transformation on the read result of the computation, and feed the transformed result of the computation back to the data reading unit; and
the data reading unit may transform the result of the computation fed back by the data storing unit, and write the transformed result of the computation in the register file unit via the writing port of the register file unit.

That is, what the data storing unit reads from the register file unit may or may not be the result of the computation by the computing unit. If in a specific implementation, the intention is to utilize only a special data transformation function of the data storing unit and the data reading unit without any operation directed to the memory, then what the data storing unit reads from the register file unit may not be the result of the computation by the computing unit.

It may be seen that the disclosure provides an instruction and a channel directly from the data storing unit to the data reading unit; by providing the instruction and channel, after the computation by the computing unit and the data transformation by the data storing unit, data are not written into the memory directly, but are looped and fed back to the data reading unit. The channel reuses the special data transformation function of the data storing unit and the data reading unit (including data rotation-displacement and the like) as well as their reading and writing ports of the register file unit; this channel and the channel of "register file unit → computing unit → register file unit" are independent of each other, and may operate in parallel, that is, they may work independently without affecting each other.

Note that in the disclosure the channel of "register file unit → data storing unit → data reading unit → register file unit" and the channel of "register file unit → computing unit → register file unit" may cooperate with each other to form a closed loop. The solution of the disclosure is described below with specific embodiments.

A loopback structure of a processor provided by an embodiment of the disclosure, as shown in Fig.2, mainly includes a data reading unit, a register file unit, a computing unit, and a data storing unit; wherein a front channel is formed by a data channel through a first reading port of the register file unit (i.e. reading port 1 shown in the figure), the computing unit, a first writing port of the register file unit (i.e. writing port 1 shown in the figure) ; and a back channel is formed by a data channel through a second reading port of the register file unit (i.e. reading port 2 shown in the figure), the data storing unit, the data reading unit, a second writing port of the register file unit (i.e. writing port 2 shown in the figure). A dotted-line arrow in Fig.2 indicates a route on which data are looped.

The computing unit is configured to read a source operand via reading port 1 of the register file unit, to perform a data computation based on the source operand, and to write a result of the computation in the register file unit via writing port 1 of the register file unit;

The data storing unit is configured to read the result of the computation via reading port 2 of the register file unit, to perform the data transformation on the result of the computation, and to feed the transformed result of the computation to the data reading unit;

The data reading unit is configured to transform the data fed back by the data storing unit, and to write the transformed data in the register file unit via writing port 2 of the register file unit; and
the register file unit is configured to provide a data reading-writing service for the computing unit, the data storing unit, and the data reading unit.

It may be seen from the loopback structure of a processor shown in Fig.2 that in order to increase efficiency of the processor and reduce power consumption of the processor, the disclosure provides an instruction and a channel directly from the data storing unit to the data reading unit (namely, the back channel). By providing the instruction and channel, after the computation by the computing unit and the data transformation by the data storing unit, data are not written into the memory directly, but are looped and fed back to the data reading unit. The back channel reuses the special data transformation function of the data storing unit and the data reading unit (such as data rotation-displacement and the like) as well as their reading and writing ports of the register file unit. With such a data feedback strategy, reading and writing operations to the memory by the processor, or any reading and writing conflicts due to such operations to the memory, is exempted.

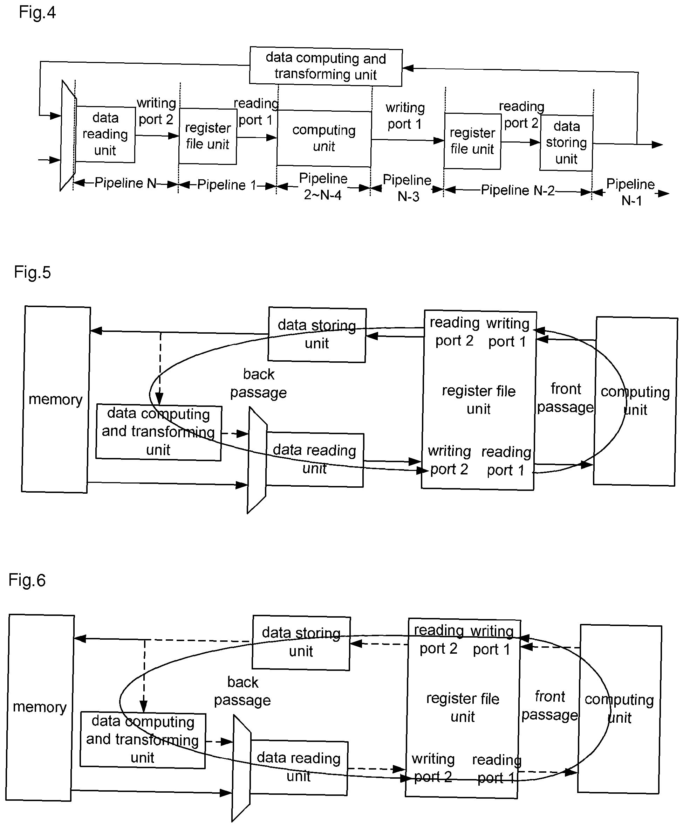

In addition, as another embodiment of the disclosure, another component (for example, a data computing and transforming unit) for performing additional data computation and data transformation may be added between the data storing unit and the data reading unit. A loopback structure of a processor of this embodiment is as shown in Fig.3, wherein a front channel is formed by a data channel through a first reading port of the register file unit (i.e. reading port 1 in the figure), the computing unit, a first writing port of the register file unit (i.e. writing port 1 in the figure); and a back channel is formed by a data channel through a second reading port of the register file unit (i.e. reading port 2 shown in the figure), the data storing unit, the data computing and transforming unit, the data reading unit, and a second writing port of the register file unit (i.e. writing port 2 shown in the figure). The dotted-line arrow in Fig.3 indicates a route on which data are looped. Fig.4 indicates an instruction pipeline of a processor for data loopback processing, wherein starting from reading data by the computing unit from the register file unit and ending at writing data back to the register file unit via the data reading unit, the instruction pipeline for looping back data requires N clock periods in total, each period corresponding to a stage of the pipeline. The function of each stage will now be described as follows.
Stage 1 (also called pipeline 1): a computing unit reads a source operand via reading port 1 of a register file unit;
Stage 2-N-4: the computing unit performs data computation based on the source operand;
Stage N-3: the computing unit writes a result of the computation in the register file unit via writing port 1 of the register file unit;
Stage N-2: a data storing unit reads the result of the computation via reading port 2 of the register file unit, performs a data transformation (for example, data rotation-displacement) on the result of the computation, and puts the transformed result of the computation on a data storing bus;
Stage N-1: a data computing and transforming unit acquires data from the data storing bus, performs further computation and transformation processing on the data, and copies the processed data onto a data reading bus; meanwhile, the data storing unit has to mask an operation directed to a memory;
Stage N: a data reading unit acquires the data from the data reading bus, performs a data transformation (for example, data rotation-displacement) on the acquired data, and writes the transformed data in the register file unit via writing port 2 of the register file unit.

Assume that N=9, thus 9 periods are required to complete one loopback instruction. In a case of no loopback instruction, to complete an operation with the same function, additional periods are required for accessing the memory. Assume that a writing operation directed to the memory requires one period, and a reading operation directed to the memory requires 3 periods, thus 13 periods are required altogether. It can thus be seen that in this case the efficiency of the processor may be increases by about 30% by using the data loopback instruction and the loopback structure. That is, the loopback structure adopted by the disclosure allows all data to circulate within a processor core, which can effectively increase performance of the processor and reduce the power consumption of the processor.

Note that, as shown in Fig.5, the front channel (register file unit → computing unit → register file unit) and the back channel (register file unit → data storing unit → data reading unit → register file unit) are in different stages of the whole pipeline of the processor. Therefore, they operate independently in parallel, and may operate different registers or operate a same register. Namely, registers in the register file unit used by the back channel and by the front channel may be same or different. When the front channel and the back channel operate the same register (that is, the front channel and the back channel use the same one register in the register file unit), a closed loop will form between them, as shown in Fig.6.

If the intention is to utilize only the special data transformation function of the data storing unit and the data reading unit without any operation directed to the memory, it is not required to form the closed loop as shown in Fig.6. However, in some computations with small data size, such a closed loop formed by the front channel and the back channel will allow the data being computed to circulate completely within the processing core, and allow very few register file resources being used. Multiple independent computations may be integrated to fill the whole pipeline of the loopback structure. In this case it is possible to further increase the performance and reduce the power consumption, and a throughput rate may be increased six to seven times compared to that before the computation integration, enabling a utilization rate of near 100% of the computing unit. What is described above are merely preferred embodiments of the disclosure, and the scope of the invention is defined by the claims.

## Claims

1. A loopback structure of a processor, comprising a register file unit, a data storing unit, and a data reading unit; wherein
the register file unit is configured to provide a data reading-writing service for the data storing unit and the data reading unit; wherein in response to executing a single instruction:
the data storing unit, which is connected to the register file unit, is configured to read data via a reading port of the register file unit, to perform a data transformation on the read data, and to feed the transformed data back to the data reading unit; and
the data reading unit, which is connected to the register file unit and the data storing unit, is configured to transform the data fed back by the data storing unit, and to write the transformed data in the register file unit via a writing port of the register file unit.

2. The loopback structure according to claim 1, wherein a data computing and transforming unit is connected between the data storing unit and the data reading unit,
the data computing and transforming unit is configured to perform computation and transformation processing on the data fed back by the data storing unit, and to provide the processed data to the data reading unit.

3. The loopback structure according to claim 1 or 2, wherein the data storing unit is configured to mask an operation directed to a memory of the processor by the data storing unit itself when the data storing unit processes the data read via the reading port.

4. The loopback structure according to claim 1 or 2, further comprising a computing unit connected to the register file unit and configured to read a source operand from the register file unit, to perform a data computation based on the source operand, and to write a result of the computation in the register file unit.

5. The loopback structure according to claim 4, wherein the data storing unit is configured to read the result of the computation based on the source operand via the reading port of the register file unit, to perform the data transformation on the read result of the computation, and to feed the transformed result of the computation back to the data reading unit; and
the data reading unit is configured to transform the result of the computation fed back by the data storing unit, and to write the transformed result of the computation in the register file unit via the writing port of the register file unit.

6. The loopback structure according to claim 1 or 2, wherein the data transformation is a data rotation-displacement operation.

7. A data loopback processing method of a processor, comprising:
in response to executing a single instruction:
reading, by a data storing unit, data via a reading port of a register file unit, performing a data transformation on the read data, and feeding the transformed data back to a data reading unit; and
transforming, by the data reading unit, the data fed back by the data storing unit, and writing the transformed data in the register file unit via a writing port of the register file unit.

8. The method according to claim 7, further comprising:
performing, by a data computing and transforming unit connected between the data storing unit and the data reading unit, performing computation and transformation processing on the data fed back by the data storing unit, and providing the processed data to the data reading unit.

9. The method according to claim 7 or 8, further comprising:
masking, by the data storing unit, an operation directed to a memory of the processor by the data storing unit itself when the data storing unit processes the data read via the reading port.

10. The method according to claim 7 or 8, further comprising:
reading, by a computing unit connected to the register file unit, a source operand from the register file unit, performing a data computation based on the source operand, and writing a result of the computation in the register file unit.

11. The method according to claim 10, further comprising:
reading, by the data storing unit, the result of the computation based on the source operand via the reading port of the register file unit, performing the data transformation on the read result of the computation, and feeding the transformed result of the computation back to the data reading unit; and
transforming, by the data reading unit, the result of the computation fed back by the data storing unit, and writing the transformed result of the computation in the register file unit via the writing port of the register file unit.

12. The method according to claim 7 or 8, wherein the data transformation is a data rotation-displacement operation.

## Patentansprüche

1. Loopback-Struktur eines Prozessors, umfassend eine Registerdateieinheit, eine Datenspeichereinheit und eine Datenleseeinheit; wobei
die Registerdateieinheit konfiguriert ist, um einen Daten-Lese/Schreib-Dienst für die Datenspeichereinheit und die Datenleseeinheit bereitzustellen,
wobei, in Reaktion auf die Durchführung einer einzelnen Anweisung:
die Datenspeichereinheit, die mit der Registerdateieinheit verbunden ist, konfiguriert ist, um Daten über einen Leseanschluss der Registerdateieinheit zu lesen, um eine Datentransformation auf den gelesenen Daten durchzuführen, und um die transformierten Daten in die Datenleseeinheit rückzukoppeln; und
die Datenleseeinheit, die mit der Registerdateieinheit und der Datenspeichereinheit verbunden ist, konfiguriert ist, um die Daten zu transformieren, die durch die Datenspeichereinheit rückgekoppelt wurden, und um die transformierten Daten in die Registerdateieinheit über einen Schreibanschluss der Registerdateieinheit zu schreiben.

2. Loopback-Struktur nach Anspruch 1, wobei eine Datenberechnungs- und transformationseinheit zwischen der Datenspeichereinheit und der Datenleseeinheit verbunden ist,
die Datenberechnungs- und transformationseinheit konfiguriert ist, um den Berechnungs- und transformationsprozess auf den Daten durchzuführen, die von der Datenspeichereinheit rückgekoppelt wurden, und die verarbeiteten Daten der Datenleseeinheit bereitzustellen.

3. Loopback-Struktur nach Anspruch 1 oder 2, wobei die Datenspeichereinheit konfiguriert ist, um einen Vorgang zu maskieren, der an einen Speicher des Prozessors durch die Datenspeichereinheit selbst gerichtet ist, wenn die Datenspeichereinheit die Daten verarbeitet, die über den Leseanschluss gelesen wurden.

4. Loopback-Struktur nach Anspruch 1 oder 2, weiter umfassend eine Berechnungseinheit, die mit der Registerdateieinheit verbunden und konfiguriert ist, um einen Quellenoperanden von der Registerdateieinheit zu lesen, um eine Datenberechnung basierend auf dem Quellenoperanden durchzuführen und ein Ergebnis der Berechnung in die Registerdateieinheit zu schreiben.

5. Loopback-Struktur nach Anspruch 4, wobei die Datenspeichereinheit konfiguriert ist, um das Ergebnis der Berechnung, basierend auf dem Quellenoperanden, über den Leseanschluss der Registerdateieinheit zu lesen, um die Datentransformation auf dem gelesenen Ergebnis der Berechnung durchzuführen und um das transformierte Ergebnis der Berechnung in die Datenleseeinheit rückzukoppeln; und
die Datenleseeinheit konfiguriert ist, um das Ergebnis der Berechnung, die durch die Datenspeichereinheit rückgekoppelt wurde, zu transformieren und das transformierte Ergebnis der Berechnung in die Registerdateieinheit über den Schreibanschluss der Registerdateieinheit zu schreiben.

6. Loopback-Struktur nach Anspruch 1 oder 2, wobei die Datentransformation ein Datenrotations-Verschiebungsvorgang ist.

7. Datenloopbackverarbeitungsverfahren eines Prozessors, umfassend:
in Reaktion auf die Durchführung einer einzelnen Anweisung:
Lesen, durch eine Datenspeichereinheit, von Daten über einen Leseanschluss eine Registerdateieinheit, Durchführen einer Datentransformation auf den gelesenen Daten und Rückkoppeln der transformierten Daten in die Datenleseeinheit; und
Transformieren, durch die Datenleseeinheit, der Daten, die von der Datenspeichereinheit rückgekoppelt wurden, und Schreiben der transformierten Daten in die Registerdateieinheit über einen Schreibanschluss der Registerdateieinheit.

8. Verfahren nach Anspruch 7, weiter umfassend:
Durchführen, durch eine Datenberechnungs- und transformationseinheit, die zwischen der Datenspeichereinheit und der Datenleseeinheit verbunden ist, eines Berechnungs- und Transformationsprozesses der Daten, die von der Datenspeichereinheit rückgekoppelt wurden, und Bereitstellen der verarbeiteten Daten an die Datenleseeinheit.

9. Verfahren nach Anspruch 7 oder 8, weiter umfassend:
Maskieren, durch die Datenspeichereinheit, eines Vorgangs, der an einen Speicher des Prozessors durch die Datenspeichereinheit selbst gerichtet ist, wenn die Datenspeichereinheit die Daten verarbeitet, die über den Leseanschluss gelesen wurden.

10. Verfahren nach Anspruch 7 oder 8, weiter umfassend:
Lesen, durch eine Berechnungseinheit, die mit der Registerdateieinheit verbunden ist, eines Quellenoperanden von der Registerdateieinheit, Durchführen einer Datenberechnung basierend auf dem Quellenoperanden und Schreiben eines Ergebnisses der Berechnung in die Registerdateieinheit.

11. Verfahren nach Anspruch 10, weiter umfassend:
Lesen, durch die Datenspeichereinheit, des Ergebnisses der Berechnung, basierend auf dem Quellenoperanden, über den Leseanschluss der Registerdateieinheit, Durchführen der Datentransformation auf dem gelesenen Ergebnis der Berechnung und Rückkoppeln des transformierten Ergebnisses der Berechnung in die Datenleseeinheit; und
Transformieren, durch die Datenleseeinheit, des Ergebnisses der Berechnung, die durch die Datenspeichereinheit rückgekoppelt wurde, und Schreiben des transformierten Ergebnisses in die Registerdateieinheit über dem Schreibanschluss der Registerdateieinheit.

12. Verfahren nach Anspruch 7 oder 8, wobei die Datentransformation ein Datenrotations-Verschiebungsvorgang ist.

## Revendications

1. Structure de bouclage d'un processeur, comprenant une unité de fichier de registre, une unité de stockage de données et une unité de lecture de données ; dans laquelle :
l'unité de fichier de registre est configurée de manière à fournir un service de lecture-écriture de données pour l'unité de stockage de données et l'unité de lecture de données ;
dans laquelle, en réponse à l'exécution d'une instruction unique :
l'unité de stockage de données, laquelle est connectée à l'unité de fichier de registre, est configurée de manière à lire des données par l'intermédiaire d'un port de lecture de l'unité de fichier de registre, à mettre en oeuvre une transformation de données sur les données lues, et à réinjecter les données transformées dans l'unité de lecture de données ; et
l'unité de lecture de données, laquelle est connectée à l'unité de fichier de registre et à l'unité de stockage de données, est configurée de manière à transformer les données réinjectées par l'unité de stockage de données, et à écrire les données transformées dans l'unité de fichier de registre par l'intermédiaire d'un port d'écriture de l'unité de fichier de registre.

2. Structure de bouclage selon la revendication 1, dans laquelle une unité de calcul et de transformation de données est connectée entre l'unité de stockage de données et l'unité de lecture de données ;
l'unité de calcul et de transformation de données est configurée de manière à mettre en oeuvre un traitement de calcul et de transformation sur les données réinjectées par l'unité de stockage de données, et à fournir les données traitées à l'unité de lecture de données.

3. Structure de bouclage selon la revendication 1 ou 2, dans laquelle l'unité de stockage de données est configurée de manière à masquer une opération dirigée vers une mémoire du processeur par l'unité de stockage de données elle-même lorsque l'unité de stockage de données traite les données lues par l'intermédiaire du port de lecture.

4. Structure de bouclage selon la revendication 1 ou 2, comprenant en outre une unité de calcul connectée à l'unité de fichier de registre et configurée de manière à lire un opérande source à partir de l'unité de fichier de registre, à mettre en oeuvre un calcul de données basé sur l'opérande source, et à écrire un résultat du calcul dans l'unité de fichier de registre.

5. Structure de bouclage selon la revendication 4, dans laquelle l'unité de stockage de données est configurée de manière à lire le résultat du calcul basé sur l'opérande source par l'intermédiaire du port de lecture de l'unité de fichier de registre, à mettre en oeuvre la transformation de données sur le résultat lu du calcul, et à réinjecter le résultat transformé du calcul dans l'unité de lecture de données ; et
l'unité de lecture de données est configurée de manière à transformer le résultat du calcul réinjecté par l'unité de stockage de données, et à écrire le résultat transformé du calcul dans l'unité de fichier de registre par l'intermédiaire du port d'écriture de l'unité de fichier de registre.

6. Structure de bouclage selon la revendication 1 ou 2, dans laquelle la transformation de données est une opération de déplacement par rotation de données.

7. Procédé de traitement de bouclage de données d'un processeur, comprenant les étapes ci-dessous consistant à :
en réponse à l'exécution d'une instruction unique :
lire, par le biais d'une unité de stockage de données, des données, par l'intermédiaire d'un port de lecture d'une unité de fichier de registre, mettre en oeuvre une transformation de données sur les données lues, et réinjecter les données transformées dans une unité de lecture de données ; et
transformer, par le biais de l'unité de lecture de données, les données réinjectées par l'unité de stockage de données, et écrire les données transformées dans l'unité de fichier de registre par l'intermédiaire d'un port d'écriture de l'unité de fichier de registre.

8. Procédé selon la revendication 7, comprenant en outre les étapes ci-dessous consistant à :
mettre en oeuvre, par le biais d'une unité de calcul et de transformation de données connectée entre l'unité de stockage de données et l'unité de lecture de données, un traitement de calcul et de transformation sur les données réinjectées par l'unité de stockage de données, et fournir les données traitées à l'unité de lecture de données.

9. Procédé selon la revendication 7 ou 8, comprenant en outre l'étape ci-dessous consistant à :
masquer, par le biais de l'unité de stockage de données, une opération dirigée vers une mémoire du processeur, par l'unité de stockage de données elle-même, lorsque l'unité de stockage de données traite les données lues par l'intermédiaire du port de lecture.

10. Procédé selon la revendication 7 ou 8, comprenant en outre les étapes ci-dessous consistant à :
lire, par le biais d'une unité de calcul connectée à l'unité de fichier de registre, un opérande source à partir de l'unité de fichier de registre, mettre en oeuvre un calcul de données basé sur l'opérande source, et écrire un résultat du calcul dans l'unité de fichier de registre.

11. Procédé selon la revendication 10, comprenant en outre les étapes ci-dessous consistant à :
lire, par le biais de l'unité de stockage de données, le résultat du calcul basé sur l'opérande source par l'intermédiaire du port de lecture de l'unité de fichier de registre, mettre en oeuvre la transformation de données sur le résultat lu du calcul, et réinjecté le résultat transformé du calcul dans l'unité de lecture de données ; et
transformer, par le biais de l'unité de lecture de données, le résultat du calcul réinjecté par l'unité de stockage de données, et écrire le résultat transformé du calcul dans l'unité de fichier de registre par l'intermédiaire du port d'écriture de l'unité de fichier de registre.

12. Procédé selon la revendication 7 ou 8, dans lequel la transformation de données est une opération de déplacement par rotation de données.
